# EUROPEAN PATENT APPLICATION

(11) **EP 2 667 631 A1**
(43) Date of publication of application: **27.11.2013**
(21) Application number: 12169114.1
(22) Date of filing: 23.05.2012
(51) Int. Cl.: H04N 21/4405, H04N 21/6547, H04N 21/4385

(54) **Data processing system and method**

(71) Applicant: TP Vision Holding B.V., 5656 AE Eindhoven (NL)
(72) Inventor: Brondijk, Robert, 1097 JB Amsterdam (NL)
(74) Representative: Nederlandsch Octrooibureau

(57) **Abstract**

The invention provides a data processing system for receiving data from a data network, the system comprising:
- a controlling module (66) for controlling data reception from the network;
- a transport stream processing module (34, 34', 34") for processing transport stream packets (71, 72, 73) comprising the data received from the network; wherein the transport stream processing module (34, 34', 34") is configured to receive transport stream packets as input packets (71, 72, 73), decrypt encrypted input packets (72, 73), and emit transport stream packets as output packets (74, 75, 76) based on the input packets (71, 72, 73); and
- a monitoring module (65, 65a, 65b) configured to monitor the packets emitted by the transport stream processing module (34, 34', 34") and to send a signal to the controlling module when an output packet (74) indicating that the stream processing module is ready to decrypt encrypted input packets (72, 73) is emitted.

## Description

### Field of the invention

The invention relates to a system and method for data processing. In particular, the invention relates to a system and method for audio/video signal processing and conditional decrypting of such signals.

### Background of the invention

. CI+ (Common Interface +) is a content control system, which is currently in use for traditional satellite signal, and cable television program reception. The CI+ system comprises a Content Access Module (CAM) which, when inserted into the corresponding Common Interface slot of a compatible TV set, allows a user to subscribe and watch a pay TV service from a pay TV service operator, without requiring an additional set-top-box. The CAM has a slot for inserting a smartcard that is issued by the service operator. A trusted channel is formed between the CAM and television receiver, when scrambled (encrypted) content is being received. The smart card, inserted into the CI+-CAM controls the decrypting of those TV programs to which the user is allowed access.

US patent 7,508,454 describes a digital television receiving system having a security mechanism which simultaneously handles two or more separate television program signals in the form of transport streams. The system includes a multiplexer which tags the received transport streams, and provides a multiplexed stream to the security mechanism. After passing through the security mechanism, the multiplexed streams can be separated based on the provided tag.

Traditionally, TV programs are delivered through radio frequency broadcast, satellite signal, and cable television formats. In the last decade, also the Internet has become an important source of audio/video (AV) data. At first, AV data from the Internet was only obtainable via a computer, coupled to the Internet. Nowadays, there are also set-top boxes and televisions which, when connected to the Internet via a home network, are capable of receiving TV programs over the Internet (IPTV). IPTV technology is often used to bring video on demand (VOD) to televisions.

The IPTV set-top box is usually provided by a content provider and comprises means for contacting an IP server on the Internet. An additional smart card may be needed to control what programs the user of the set-top box is allowed to watch. The address of and communication with the IP server are typically proprietary. Each provider sells its own proprietary set-top boxes and provides its own IPTV program offerings. A set-top box from one content provider is not suitable for communicating IP servers of other providers.

For the content providers who want to apply Digital Rights Management (DRM) measures, e.g. to prevent unauthorized copying, a disadvantage of the currently available set-top box based IPTV systems is that the audio/video data can easily be derived from the audio/video output ports of the set-top box. This disadvantage could be overcome by encrypting the audio/video output of the set-top box. Such encryption would however make it necessary for the provider to either sell proprietary TVs for decrypting and presenting the audio/video data or to use a standard encryption key that would probably be available to the public very soon. If for each source of (audio/video) data separate devices with their own DRM schemes are used, it is disadvantageous since users will have to procure and place multiple devices and suppliers have to develop and support additional devices.

The copy protection mechanisms in these devices usually functions as follows. Besides the encrypted content itself, the network also makes decryption information data available. This decryption information data can be used to initialize a decryption module of a decryption module, for example an internal decryption system of a Conditional Access Module, so that after initialization the CAM is ready to decrypt data that is encrypted in accordance with the decryption information. Typically, the CAM will require a combination of received (remote) decryption information and local authorisation (for example a smart card in a CAM module) in order to decrypt received encrypted data. A disadvantage of such schemes is that it takes time for the CAM to be initialized. While the CAM is initializing, the received encrypted content must either be buffered for later decryption, or discarded. Both alternatives have drawbacks. Either input buffer storage is required, which increases the cost of the device, or part of the received data is discarded and thus never seen by the user. An additional complication is that the initialization delay of the transport stream processing unit is variable. Worst-case scenarios must therefore be considered in both alternatives.

### Summary of the invention

It is an object of the invention to provide a system and method for data processing which overcomes at least one of the above mentioned disadvantages.

The invention provides a system for receiving data from a data network via a network interface. The system comprises a transport stream processing module (TSPM).

Data received from the network is provided as transport stream input packets (for short: input packets) to the TSPM. The TSPM processes the packets and generates output packets based on the input packets.

The output packets are monitored. If an output packet is detected that indicates that the transport stream processing module is ready to decrypt encrypted data, a signal is sent to a controlling module. The controlling module causes the system, via the network interface, to request encrypted data from the network. The encrypted data is sent to the TSPM to be decrypted.

An advantage of the system is that input data does not need to be buffered while the transport stream processing module is being initialized for decrypting. A further advantage is that the system does not rely on a priori assumptions of the maximum delay that might be incurred by the initialization of the TSPM.

In an embodiment according the invention, monitoring module detects an output packet comprising decryption information. This packet can serve as the trigger for the controlling module. If the transport stream packet is an MPEG-2 or similar type transport stream packet, the packet type may be inferred from the packet's packet identifier (PID) value. Packets comprising information relating to the type of encryption used may have a special pre-determined PID.

In an embodiment according the invention, the TSPM may be configured to emit a packet comprising decryption information after it completes initialization of its internal decryption module and is ready to decrypt data. The TSPM may be configured to emit a packet having a pre-determined PID when it is ready to decrypt.

In an embodiment according the invention, the TSPM may comprise a Conditional Access Module (CAM). Decryption can be based on a combination of the received decryption information and locally available authorisation and/or decryption information, such as information provided via a smart card in the CAM.

In an embodiment according the invention, the TSPM or CAM may be configured to re-encrypt decrypted information. This can for example be done in order to set up a secure channel towards the decoder or a display device.

In an embodiment according the invention, the data received from the network may be formatted as ISO base media file format (ISOBMFF) data. The decryption information data may be in a box of the ISOBMFF data.

In an embodiment according the invention, the system may be provided with a stream number tagging module, configured to tag packets of a each stream of a plurality of input transport streams with a unique stream number. With such a stream number tagger, a plurality of streams can be multiplexed and processed by a single TSPM. After processing, the multiplexed streams can be separated again based on the stream numbers.

In an embodiment according the invention, the monitoring module is configured to send a signal to the controller indicating which stream is ready for decryption, based on the stream number tag of the detected packet.

A tagging module is provided which is configured to tag transport stream packets having encapsulated data according to a type of the data. The tags can be according to a predetermined coding rule.

In an embodiment according the invention, the system comprises an encapsulation module configured to encapsulate data received from the network in transport stream packets suitable for the transport stream processing module.

In an embodiment according the invention, the transport stream processing module comprises a conditional access module (CAM). In a further embodiment, the transport stream processing module is configured to decrypt encrypted data that it receives in transport stream packets. An example of such a module is a CI CAM. In a yet further embodiment, the transport stream processing module is also configured to re-encrypt the decrypted packets. This may for example be done in order to set up a trusted connection, for copy protection purposes, between the processing module output and a audio/video decoder, storage unit, or digital television input. An example of such a processing module is a CI+ CAM. In an embodiment, the transport stream processing module is provided with an encryption key that corresponds to an decryption key held by the intended receiver of the output of the transport stream processing module. Such keys can be stored securely and tamper-proof in the hardware of the module and intended receiver.

A transport stream (TS) packet consists of 188 bytes, of which the first 4 bytes have a predefined syntax. The very first byte is the "sync" byte with a predefined value of 0x47. However, the value of this byte is unused over the CI CAM interface as there is a separate hardware wire that identifies the first byte. The same holds for the output of a tuner. For this reason, in an embodiment according the invention, the sync byte can be used for tagging type and/or stream number. As such, the sync byte is used to identify that the contents of the other 184 bytes follow special parsing rules. "Parsing rules" can also be called "payload type". Special parsing rules are needed for a particular payload type. For example the standard sync byte value 0x47 means "payload DVB". This invention proposes that a number of other sync byte values can be used for specific payloads.

The invention further provides a method for processing data received from a network, the method comprising
- receiving data from the network via a network interface;
- providing the received data as input transport stream packets to a transport stream processing module;
- monitoring output transport stream packets of the transport stream processing module; and
- after detecting an output packet indicating that the transport stream processing module is ready to decrypt encrypted data, controlling the network interface to receive encrypted data.

The invention further provides a computer storage medium comprising computer program instructions which, when executed, causes a programmable computer device to perform the method as described above, or when executed on a programmable processor of an audio/video device causes said device to perform according to the described system.

### Brief description of the Figures

The invention will be explained in detail with reference to some drawings that are only intended to show embodiments of the invention and not to limit the scope. The scope of the invention is defined in the annexed claims and by its technical equivalents. I.e., a person skilled in the art will understand that features, components, elements, etc. explicitly used to explain the invention can be substituted by technical equivalents unless otherwise stated.

On the attached drawing sheets,
- figure 1 schematically shows a Common Interface system;
- figure 2 schematically shows a transport stream packet according to an embodiment of the invention;
- figures 3a and 3b schematically show processing overviews as currently known (figure 3a) and according to an embodiment of the invention (figure 3b);
- figure 4a schematically shows a data processing system according to an embodiment of the invention;
- figure 4b schematically shows a data request according to an embodiment of the invention;
- figures 5, 6, and 7 each schematically show a content control system according to an embodiment of the invention; and
- figure 8 schematically shows a transport stream processor according to an embodiment of the invention.

### Detailed description

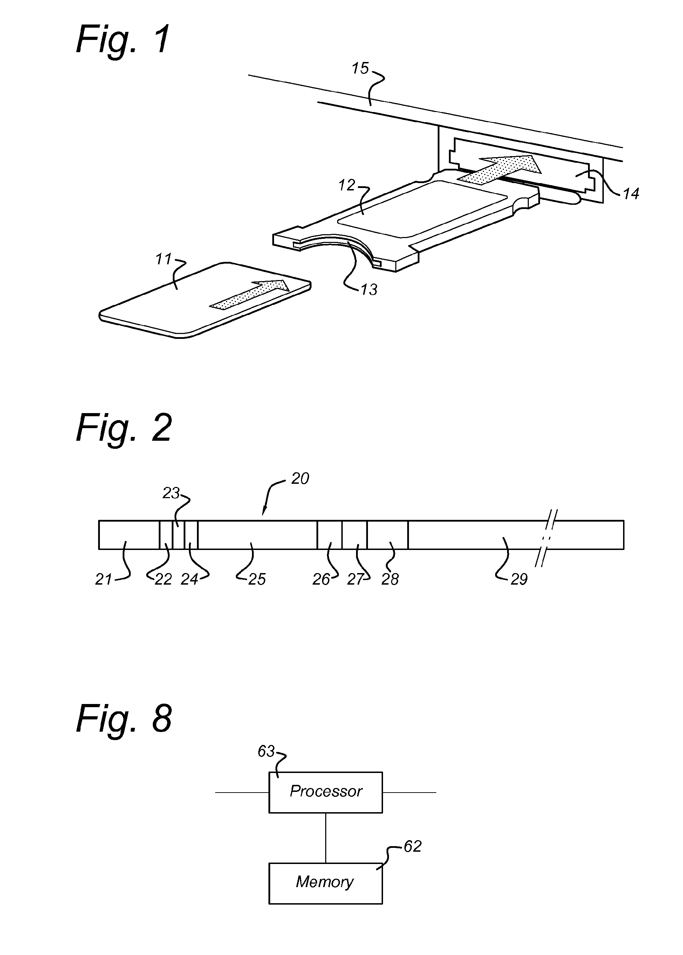

Figure 1 schematically shows a Common Interface (CI) or Common Interface Plus (CI+) system. The system comprises a CI+ conditional access module (CI+-CAM) 12, with a slot for receiving a smart card 11. The CI+-CAM 12 may, e.g., be inserted in a PCMCIA-like slot of a compatible TV 15 or integrated receiver/decoder (1RD). The CI+-CAM 12 enables the TV 15 to receive programs provided by a service operator, for example as a digital signal via a co-axial cable connected to a digital tuner of the TV 15 or IRD. If the system comprises the TV 15, the IPTV program is displayed by the TV 15. The system may alternatively comprise an IRD or set-top box, which provides the IPTV program as data at a digital or analog output port. A TV or audio set coupled to the IRD may be used for presenting the AV data to the user. Alternatively, the AV data may be stored on a storage medium for later use. It is to be understood that the term "TV" is meant to include any display apparatus that is least capable of showing images and/or video to a user. In most cases a "TV" is also capable of outputting audio to a user.

The functionality of a CAM can be defined as follows. A conditional access module (CAM) is an electronic device, usually incorporating a slot for a smart card, which equips an Integrated Digital Television or set-top box with the appropriate hardware facility to view conditional access content that has been encrypted using a conditional access system. They are normally used with direct-broadcast satellite (DBS) services, although digital-terrestrial pay TV suppliers also use CAMs. PC Card form factor is used as the Common Interface form of Conditional Access Modules for digital video broadcasts (DVB). The primary purpose of the CAM is to derive control words, which are short-term decryption keys for video. The effectiveness of a CAM depends on the tamper resistance of the hardware. If the hardware is broken, the functionality of the CAM can be emulated, enabling the content to be decrypted by non-subscribers. CAMs are normally removable so that they can be replaced after the hardware security is breached. The standard format for a CAM is a PC Card which takes a smart card to authenticate, although CAMs with the 'smart card' burnt into memory can be found. In addition, CAM emulators exist for many systems, either providing an interface to allow the use of more than one type of card, or a card not designed for that receiver.

In the example of figure 1, the TV 15 is provided with a CI+ slot 14 for the CI+ CAM 12. The CI+ CAM 12 has slot 13 for receiving a smart card 11. The CI+-CAM 12 is arranged to read and process data from a chip on the smart card 11.

It is noted that in the examples reference is made to a CI+ system. However, the invention can also be used in connection with CI systems or other existing content control system.

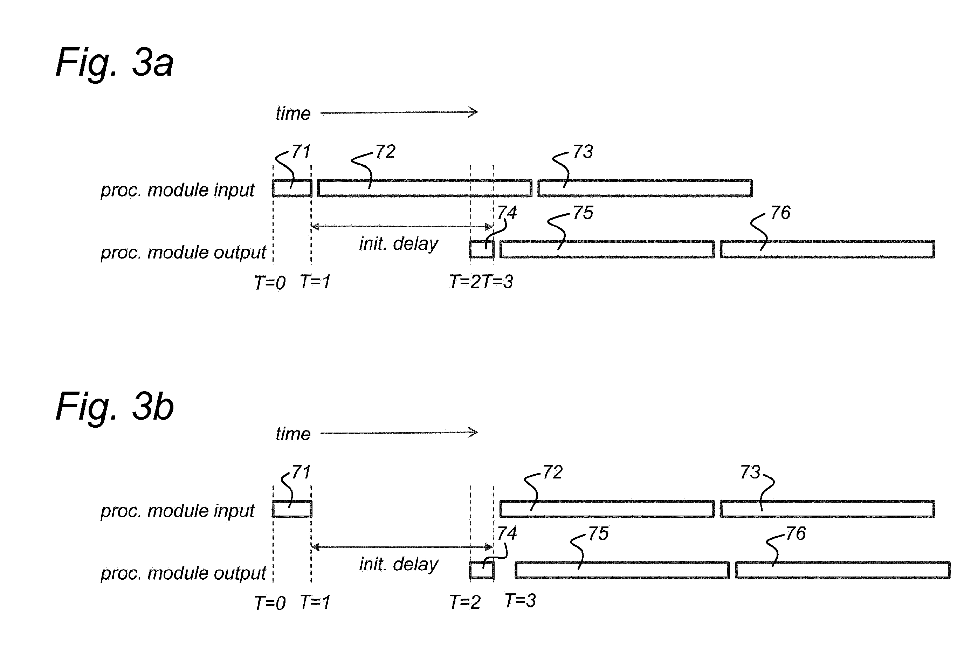

The signal processing in a content control system according the invention will be discussed further in reference to figures 3 - 7. First an overview of transport stream packets will be given in reference to figure 2.

MPEG transport stream (TS) is a standard format for transmission and storage of audio, video, and Program and System Information Protocol (PSIP) data, and is used in broadcast systems such as DVB and ATSC (= Advanced Television Systems Committee).

Transport Streams are specified in MPEG-2 Part 1, formally standardized as ISO/IEC standard 13818-1. Transport stream specifies a container format for elementary streams (typically audio or video streams) as a flow of packets, with error correction and stream synchronization features for maintaining transmission integrity when the signal is degraded.

In CI and similar content management systems, the access-checking part (in the present case, the Conditional Access Module 12) is adapted to receive and, if access is granted, decrypt transport streams. The decrypted transport streams can then be sent, possibly via another secured channel, to a display or storage device.

The ISO/IEC standard 13818-1 defines the layout of a transport stream packet 20, as schematically shown in figure 2. Each packet has a fixed size of 188 bytes. The first byte of a packet is a synchronisation (sync) byte 21, which has the fixed value of 0x47 (hexadecimal 47). It is followed by transport error indicator bit 22, payload unit indicator bit 23, transport priority bit 24 and packet identifier (PID) 25 (13 bits). The PID is followed by a scrambling control value 26 (2 bits), adaption field exists value 27 (2 bits) and continuity counter value 28 (4 bits). The header 21-28 of the packet stream thus comprises 4 bytes. The remaining 184 bytes of the packet are called the payload 29. In the CI CAM system, the fixed 0x47 value of the sync byte 21 is not needed for synchronizing the packet, as this is achieved using a separate synchronization control.

According to an embodiment of the invention, in transport stream packets 20 the sync byte 21 is given a predetermined value different from 0x47 if the payload of the transport stream is not an elementary stream or other MPEG-2 standard data format. That is, the sync byte 21 is used to indicate the type of data that is (partly) comprised in the payload 29 of the transport stream packet 20. In a further embodiment of the invention, the sync byte 21 is used to indicate the type of data and also to indicate a stream number, the stream number distinguishing between streams of the same type. Aspects of the invention will be further elucidated in reference to figures 3-7.

Figure 3a shows a schematic overview of received and emitted packets in a buffered DRM system. A network interface (not shown) delivers a stream of input transport stream packets 71, 72, 73 to a transport stream processing module. The TSPM may be a Conditional Access Module. Between times T=0 and T=1, an input packet 71 is received by the transport stream processing module. The packet 71 comprises decryption information data, which the TSPM uses to initialize its internal decryption module. At time T=2 the TSPM is initialized and an output packet 74 based on the input packet 71 is emitted. Output packet 74 can be the same as input packet 71, or it can comprise only the data of packet 71 not related to decryption. At time T=3, the packet 74 is completely emitted by the TSPM.

Input packet 71 was followed by encrypted packets 72 and 73. These packets can only be decrypted by the TSPM after the internal decryption module is initialized. Therefore, output packet 75 based on encrypted input packet 72 can only be emitted after T=3. The decryption thus introduces a delay in the system equal to the amount of time between T=3 and T=1. In order not to lose data, the input packets 72, 73 need to be buffered during this delay, before they can be processed, decrypted, and emitted as output packets 75 and 76 respectively. Alternatively, input packet 72 can simply be dropped so that encrypted packet 73 is the first packet that is processed and decrypted by the TSPM. However, in that case data is lost.

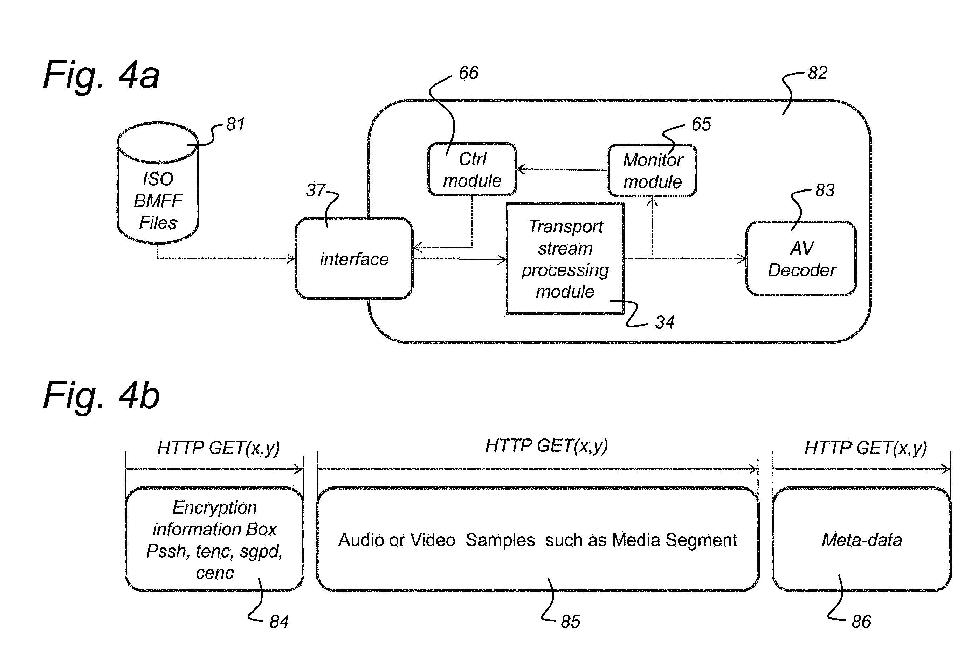

Figure 3b shows a schematic overview of received and emitted packets in a system according to an embodiment of the invention. Input packet 71 causes the TSPM 34 (see figure 4a) to initialize its internal decryption module. Between times T=2 and T=3 output packet 74 based on input packet 71 is emitted. If MPEG-2 transport stream packets are received and emitted by the transport stream processing unit, the PID field in the header of packets 71, 74 will typically indicate that the packet comprises (meta)data relevant for decryption.

A monitoring module 65 (see figure 4a) monitors the emitted output packets 74, 75, 76 of the TSPM 34. When the monitoring module 65 detects the output packet 74, which indicates that the processing module has completed the initialization of the internal decryption module, a signal is sent to a control module 66 (figure 4a). The control module 66 will then take action to receive the encrypted input packets 72, 73 and to send them to the TSPM 34. The initialized TSPM will immediately begin processing input packets 72, 73 and start emitting output packets 75, 76 with minimal delay.

In contrast with the buffered scheme of figure 3a, the scheme of figure 3b advantageously requires much smaller input buffers (if any) and can deal with variable initialization delays.

It is noted that output packets 75 and 76 may be "in the clear" (not encrypted) or (re-)encrypted, for example using a key of the decoder or intended display device in order to set up a secure channel from the TSPM to the decoder or intended display.

Figure 4a schematically shows a data processing system 82 according to an embodiment of the invention. The system 82 is provided with a network interface 37 for receiving data from a network, in this case ISOBMFF data from an ISOBMFF data server, such as an HTTP (web) server on a Local Area Network or the internet. The interface 37 is configured to provide the received data as transport stream packets to a transport stream processing module 34. The transport stream processing module emits output packets, which are sent to an audio/video (AV) decoder 83, in this case a decoder that is configured to decode ISOBMFF data. The emitted output packets are monitored by monitoring module 65. The monitoring module 65 is in turn configured to signal a controlling module 66. The controlling module 66 is adapted to control the interface 37.

Figure 4b shows example data that may be requested from the ISOBMFF data source 81. The example data comprises decryption information 84 (for example in an encryption information box), audio/video data 85 and meta data 86. The audio/video data 85 is encrypted. The decryption information 84 comprises details needed by a transport stream processing unit 34 for decrypting the audio/video data 85. The decryption data 85 may be sent as one or more packets 71, whereas the audio/video data may be split up over a relatively large number of input packets 72, 73. The meta-data 86 may be encrypted or transmitted in the clear.

In operation, the system 82 of figure 4a functions as follows. The controlling module 66 controls the interface and requests the decryption information 84 from the ISOBMFF source 81. This is then transmitted to the interface 37 by source 81. The interface forwards the received decryption data as input packet 71 to the TSPM 34. The TSPM recognizes the input packet 71 as comprising decryption data and initializes its internal decryption module. After initialization, the TSPM 34 emits output packet 74 based on input packet 71. Output packet 74 may be identical to input packet 71, or it may comprise modified data. In any case, the monitoring module 65 is able to tell from the emission of packet 74 that the TSPM 34 is initialized for decrypting, and sends a signal to the controlling module 66. The controlling module then requests, via interface 37, the encrypted audio/video data 85 from the source 81.

In the case of an ISOBMFF source, several TS packets may be needed to encapsulate the decryption information. The first TS packet will be the start of a box and thereby comprises identification of the type of data that is in the box, which the monitoring module 66 may trigger on. The TSPM 34 programs its internal decryption module. When finished, it emits the first TS packet it received of the encryption information data. This informs the receiver that the TSPM is prepared to decrypt the audio or video data that belongs to that data. Thus, in an embodiment according the invention already at time T=2 (figure 3b) the controller can start requesting encrypted audio/video data. The relatively small time needed for the TSPM to emit the full series of TS packets with decryption information can be compensated using buffers. In addition, the network interface 37 will also generally not be able to deliver encrypted content instantaneously.

A sequence of events of a method according to an embodiment of the invention can be summarized as follows. A network interface 37 accesses decryption information from a remote server. The server sends the decryption information, which is passed on, via the network interface, to the transport stream processing module 34. The transport stream processing module 34 then programs its internal decryption module based on the received decryption information. When finished, it emits at least one packet 74 to signal that it can now decrypt. The monitoring module 65 sees the decryption information packet 74 emitted from the transport stream processing module 34 and sends a signal to the controller 66. The controller can now start to send (or control the interface to send) encrypted content to the transport stream processing module 34. The transport stream processing module now receives encrypted content and can decrypt it and, if needed, re-encrypt with keys shared with the AV Decoder or intended display device. Here after, the controller 66, in cooperation with the network interface 37, accesses either more encrypted content or may access other decryption information that is needed to decrypt the next set of content that the controller needs to access. If the controller accesses decryption information, it accesses it only after all of the currently accessed content has passed through the transport stream processing module. So once all of the previous content has passed through the TSPM 34, the controller 66 accesses the decryption information from the server for the next set of content. If the controller wants all of the next set of content to be decrypted, it must wait for the signal from the monitor. If the controller chooses not to wait, then not all content sent to the TSPM may be decrypted.

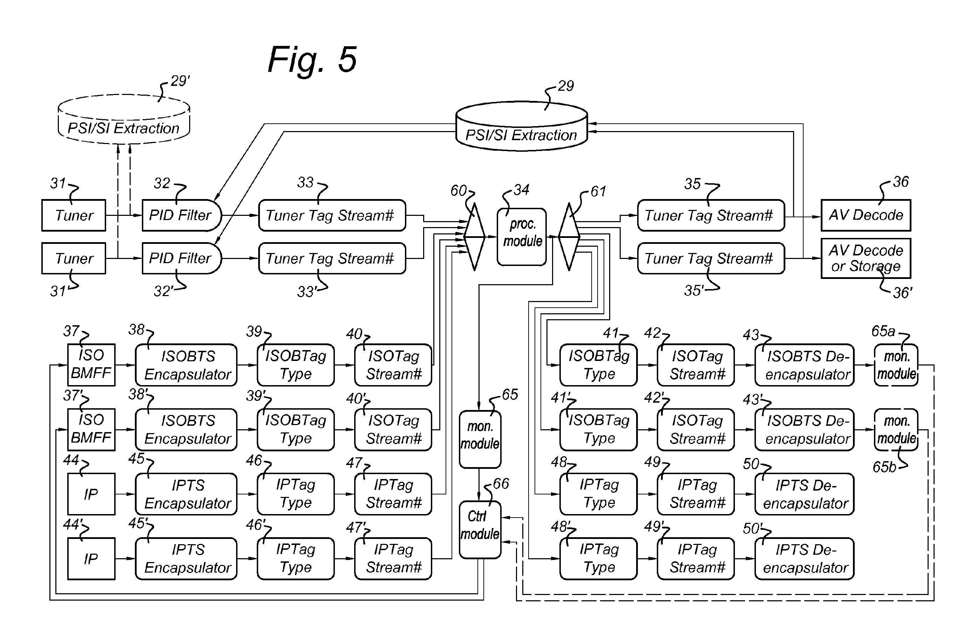

Figure 4a shows a data processing system according to an embodiment of the invention having just one data stream. In reference to figures 5, 6, and 7 more complex system systems will be discussed.

Figure 5 shows a Common Interface based content control system according to an embodiment of the invention. Such a system can for example be a part of a television system or of a set-top box. These are but two of the most common examples. In general, any signal processing device can comprise a content control system according the invention.

Two digital tuners 31 and 31' are provided. These tuners 31, 31' can be connected to, for instance, a coaxial cable over which a digital TV signal is transmitted. The tuners 31, 31' select a transport stream from the signal and provide it to a respective PID filter 32, 32'. The PID filters 32, 32' allow only selected packets with selected PIDs to pass. The filtered packets are then tagged with a respective stream number by taggers 33 and 33', and subsequently multiplexed to a single stream by multiplexer 60. The taggers 33, 33' each apply a unique stream tag to the packets, so that after multiplexing the packets originating via tuner 33 and filter 32 from tuner 31 can still be distinguished from those originating via tuner 33' and filter 32' from tuner 31'. An advantage of this tagging operation is that a single CAM can be used to control conditional access to two streams at once.

The multiplexed stream is sent to transport stream processing module 34. In the present example, the TS processing module is a CAM. However, the invention can also be applied to other types of systems in which data streams from various sources are used.

If the CAM 34 is properly authorized (in the case of a CI system for example by a valid inserted smart card 11), the stream is decrypted and passed on the demultiplexer 61. The demultiplexer 61 separates the streams based on the tags added by the taggers 33 and 33'. After that, the respective tagged streams are restored to their previous untagged state by de-taggers 35 and 35'. The respective streams are then passed on to AV modules 36, 36' for decoding and displaying or storing the transport streams.

Program-specific information (PSI) is metadata about a program (channel) and part of an MPEG transport stream. The PSI data contains five tables: PAT (program association table), CAT (conditional access table), PMT (program map table), NIT (network information table), and TDT (time and date table). PSI is carried in transport streams in the form of a table structure. The table structure can span multiple transport stream packets. The PSI data should never be scrambled so that the decoder at the receiving end can easily identify the properties of the stream. The system thus has the option of extracting PSI data before the CAM 34 (using PSI extractor 29') or after the CAM 34, using PSI extractor 29.

As an alternative to MPEG-2 elementary and transport streams, ISO base media file format (ISOBMFF) defines a general structure for time-based multimedia files such as video and audio. It is used as the basis for other media file formats, for example formats MP4 and 3GP. The ISO base media file format was specified as ISO/IEC 14496-12 ISO/IEC 15444-12. The ISO base media file format contains the timing, structure, and media information for timed sequences of media data, such as audio-visual presentations. The file structure is object-oriented. Files conforming to the ISO base media file format are formed as a series of objects, called "boxes". All data is contained in boxes and there is normally no other data within the file. The "box" is an object-oriented building block defined by a unique type identifier and length.

The invention provides a means for encapsulating ISOBMFF files in transport stream packets, so that a standard CAM 34 can be used for conditional access control. This has the advantage that no separate conditional access module needs to be provided for this type of input.

An ISOBMFF module 37 is provided for receiving a ISOBMFF file. The file is encapsulated by ISOBTS encapsulator 38 to form transport stream packets, which are then tagged by type tagger 39 and stream tagger 40. In a parallel channel, ISOBMFF module 37', encapsulator 38', and taggers 39' and 40' are provided. The packets are provided with a distinguishing sync byte by type taggers 39, 39' and stream taggers 40, 40'. The act of encapsulating ISOBMFF files in transport stream packets comprises the actions of splitting the ISOBMFF file in chunks of 184 bytes (according the transport stream payload 29 size), generating transport stream packets with payloads containing chunks of ISOBMFF data, and initializing the header values 21-28 of the transport streams with suitable values. If a chunk does not fill an entire transport stream packet, zero-padding may be used. The ISOBMFF file comprises a size field, so that the zero-padded data can later be removed again by the de-encapsulator.

In an embodiment according the invention, ISOBMFF encapsulating streams have a sync byte 21 value of 0x5m where the 4 most significant bits (hex value 0x5) are set by type tagger 39 and 39' and the 4 least significant bytes (variable 'm') have a value between 0 and 0xf indicating the stream number, as set by stream taggers 40 and 40'. For example, stream tagger 40 may set m=0 and stream tagger 40' may set m=1, so that the first ISOBMFF stream (originating from module 37) will comprise transport packets with sync byte 0x50 and the second ISOBMFF stream (originating from module 37') will comprise transport packets with sync byte 0x51.

In an embodiment according the invention, the transport error indicator 22 is set to 0 to indicate no errors. The payload unit indicator 23 can be set to 1 to indicate a start of a new ISOBMFF file (for the packet comprising the first chunk). The transport priority bit 24 can be set to 1. The PID value 25 can be set with a predetermined value to indicate if the ISOBMFF file comprises audio, video, meta-data, or any other kind of data. The transport scrambling control 26 can be set to indicate the content is scrambled. The adaptation field 27 may be set to 01 binary to indicate that the payload comprises only data. Finally, the continuity counter 28 can be set to indicate a start of the packet set.

In an embodiment according the invention, the sync value of an TS packet encapsulating non MPEG-2 data indicates the data structure (e.g. ISOBMFF) and The PID can indicate audio, video, data, protection etc. from the ISOBMFF file. In an embodiment according the invention, the adaptation field 28 value can indicate whether the ISOBMFF payload comprises further ISOBMFF boxes (nested boxes), or the payload 29 forms a single box.

Both ISOBMFF streams are multiplexed by multiplexer 60 into a multiplexed stream that is provided to the CAM 34. Because the CAM 34 does not interpret the contents of the payload, the act of encapsulating the ISOBMFF file in transport stream packets advantageously allows the system to utilize the CAM for conditional access control.

After passing through the CAM 34, the decrypted ISOBMFF streams are demultiplexed by demultiplexer 60. The type de-taggers 41, 41' and stream de-taggers 42, 42' interpret the sync byte of the transport stream packets originating from the CAM 34, and will recognize which packets are meant for them. In the present examples, packets with a sync byte 21 value of 0x50 are for de-taggers 41 and 42, whereas packets with a sync byte 21 value of 0x51 are for de-taggers 41' and 42'.

In the present example the type and stream taggers and de-taggers are shown in the order of type (de)tagger before stream (de)tagger. This order is not important. It is also possible to provide a single tagger and de-tagger that performs both type and stream (de)tagging.

Finally the ISOBMFF streams are de-encapsulated by de-encapsulators 43, 43'. The act of de-encapsulating can comprise the actions of receiving a number of transport stream packets, storing the payloads and noting the sequence numbers of the chunks, for example using the continuity counter 28, and restoring the original, but now decrypted, ISOBMFF file from the stored payloads. The restored and decrypted ISOBMFF can then be sent to an appropriate module, such as a ISOBMFF decoder (not shown).

The invention also provides a means for encapsulating Internet Protocol (IP) packets in transport stream packets, so that a standard CAM 34 can be used for conditional access control of data received as general IP packets, such as IPTV data. This also has the advantage that no separate conditional access module needs to be provided for this type of input.

In the present example, two IP modules 44, 44' are provided. These can for example comprise a UTP connection or a wireless network receiver. An IP stack, possibly also supporting TCP, UDP, or RTP is provided. The IP modules 44, 44' can receive IP packets originating from a network, such as a local area network (LAN) or the internet, and send these packets on to the respective IP encapsulators 45, 45'.

Similar to the case for ISOBMFF, the encapsulators 45, 45' generate a stream of transport packets having the IP packet data as payload. If the IP packets have a size of up to 184 bytes, they can be comprised in a single transport stream packet. Otherwise, the packets have to be split up into 184 byte chunks and divided over multiple transport stream packets. Zero-padding can be used if a chunk does not fill a transport stream packet. The IP packet includes its header, which includes the byte count. The IP packet will thus be split over the transport stream packets if it contains more than 184 bytes. The first transport stream packet can be signalled by putting the payload unit start indicator 23 to the value "1". The adaptation field control value 27 can again be set to 01 binary to signal that there is no adaption field control. The continuity counter 28 may be set to the value "0" for the first packet and after that be incremented by 1 with modulus 16 (so that there are 16 unique continuity values at any given time, which should be adequate to restore the order of packets). If the IP packets comprise scrambled data (for example an encrypted IPTV stream), the scrambling control bit 26 can be set.

Again the sync byte can be used to identify both the type of data (IP packets) and a stream number (to distinguish the stream of packets from module 44 from those of module 44'). For example, the value 0x6m can be used, where the most significant 4 bits, having the fixed value of 0x6, indicate an IP stream encapsulated as TS packets, and the least significant 4 bits, variable m, again indicate the stream number. Thus, in a similar fashion as described in reference to ISOBMFF taggers 38, 38', 39, and 39', the IP type taggers 46, 46' and IP stream number taggers 47, 47' set the sync byte to a unique value so that the packets can be separated again after being multiplexed by multiplexer 60.

The multiplexed stream is passed through the CAM 34. The CAM 34 decrypts the TS packet payloads, and thus the IP packets, if required and if properly authorized using common control measures. The decrypted TS packets are demultiplexed by demultiplexer 61 and provided to de-taggers 41, 42 (for exemplary transport stream packets with sync byte 21 value 0x60) and 41', 42' (for exemplary transport stream 0x61). After the action of de-tagging, the IP packets are de-encapsulated and restored to the original, albeit decrypted, form. The restored IP packets can then be sent to a suitable processing module, for example an IPTV decoder (not shown).

A monitoring module 65 monitors the output packets of the CAM 34. It monitors for output packets that indicate that the initialisation of the internal decryption module of the CAM 34 is completed. This is indicated by an output packet that comprises ISOBMFF decryption information data. When the monitoring module 65 detects such a packet, it checks the stream number of the packet. By checking the stream number, the monitoring module can detect whether the ISOBMFF decryption data is related to the ISOBMFF input from ISOBMFF module 37 or module 37'. A respective signal is sent to controlling module 66. The controlling module 66 then indicates to the relevant ISOBMFF module 37 or 37' that the CAM 34 is now ready to receive encrypted data packets. The ISOBMFF module 37 or 37' will then start requesting encrypted audio/video data from the ISOBMFF network source (not shown).

There are multiple places in the system where a monitoring module 65 may be placed. For example, instead of after the TSPM or CAM 34, it is also possible to place a monitoring module 65a, 65b after each de-encapsulator 43, 43'. That arrangement has the advantage that the monitoring module 65a, 65b does not have to check for the stream number (the multiplexed streams have already been separated) but has the disadvantage that a separate monitoring module 65a, 65b is needed for each stream. Other locations are also possible. A monitoring module may for example be placed after the de-multiplexer 61, in each stream..

It is noted that figure 5 only shows a monitoring module 65 and controlling module 66 for monitoring and controlling the two ISOBMFF input streams of the example system of figure 5. However, the modules 65 and 66 could also monitor and control other streams, such as the IP streams (interfaces 44 and 44') of figure 5.

In a variant of the embodiment of figure 5, the type information and/or the stream number are communicated to the CAM via another signal path than via the sync byte of the transport packet. For example, a PMT (program map table) can be used to signal the stream number and/or stream type to the transport stream processing module 34. In particular, a PMT can be used to map PIDs of packets to specific streams and/or types of streams. A mixed way is also possible, e.g. communicating the type information via a PMT and the stream number via the sync byte. In any of these alternative ways, the effect of being able to separate the multiplexed stream emerging from the transport stream processing module into the original individual streams with a specific format / number can also be achieved. The stream taggers / de-taggers of figure 5 would be adapted accordingly.

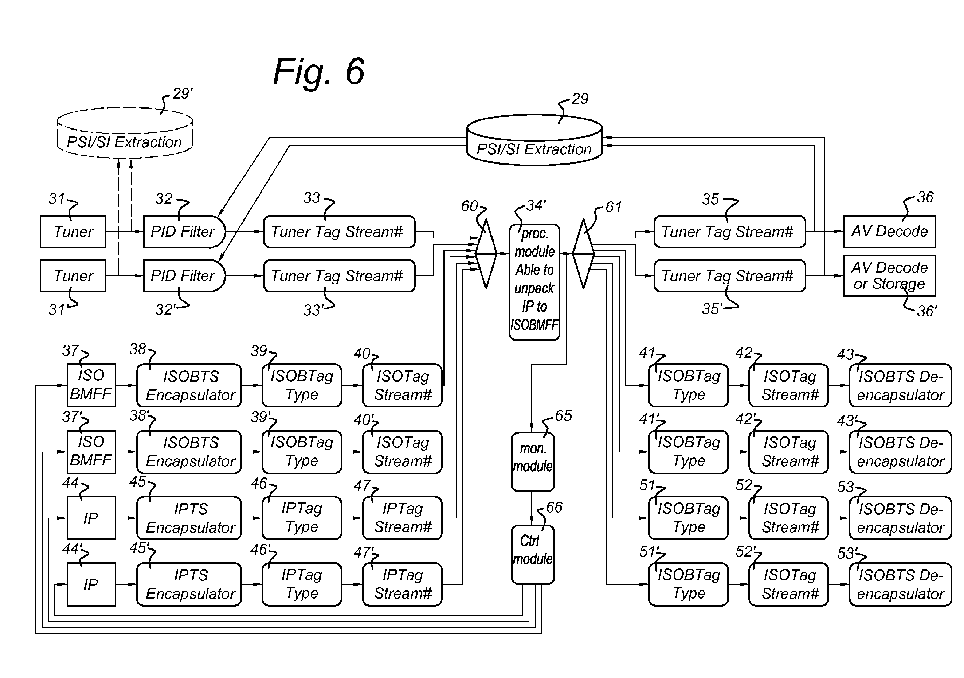

Figure 6 shows a variant of the system of figure 5 according to a further embodiment of the invention. In this case a transport stream processor module 34' is provided, which is configured to convert encapsulated IP packets in transport stream packets directly to ISOBMFF data. The output of module 34', which can also be a CAM 34', are then transport stream packets comprising ISOBMFF data. The de-taggers 51, 51' and 52, 52' are thus similar to de-taggers 41, 41', and 42, 42'. In this system, it can be advantageous to let stream number taggers 33, 33', 40, 40', 47, and 47' use stream IDs that are unique in the entire system, not just unique for the given format. This is because after the demultiplexing, there are in the present example four ISOBMFF streams instead of two. Each of the four ISOBMFF streams should have a unique stream number tag.

For example, the stream number taggers 33, 33', 40, 40', 47, and 47' could use stream numbers 0x7, 0x8, 0x9, 0xa, 0xb, 0xc respectively. The sync bytes of the six input streams could for example be set to 0x47, 0x48, 0x59, 0x5a, 0x6b, 0x6c. After the processing in module 34' and demultiplexing by demultiplexer 61, the six streams seen by de-taggers 35, 35', 41, 41', 51, 51' will have the sync bytes values of 0x47, 0x48, 0x59, 0x5a, 0x5b, and 0x5c respectively. The streams from de-taggers 51, 52 and 51', 52' (in the present example having sync byte values 0x5b and 0x5c respectively) are sent to ISOBMFF de-encapsulator modules 53 and 53' respectively.

As a further alternative to the variant of figure 6, the encapsulators 45, 45' could be enhanced with the functionality of converting IP packets to ISOBMFF data. In that case, the taggers 46, 46', and 47, 47' can function similarly to taggers 39, 39' and 40, 40', and for example tag the sync byte values as 0x59, 0x5a, 0x5b, 0x5c. The TS processing module 34' can then be the same as TS processing module 34.

The monitoring module 65 can monitor four streams for decryption information packets. Based on the stream number, the controlling module 66 will cause the corresponding interface module 37, 37' (ISOBMFF) or 44, 44' (IP) to start requesting encrypted data.

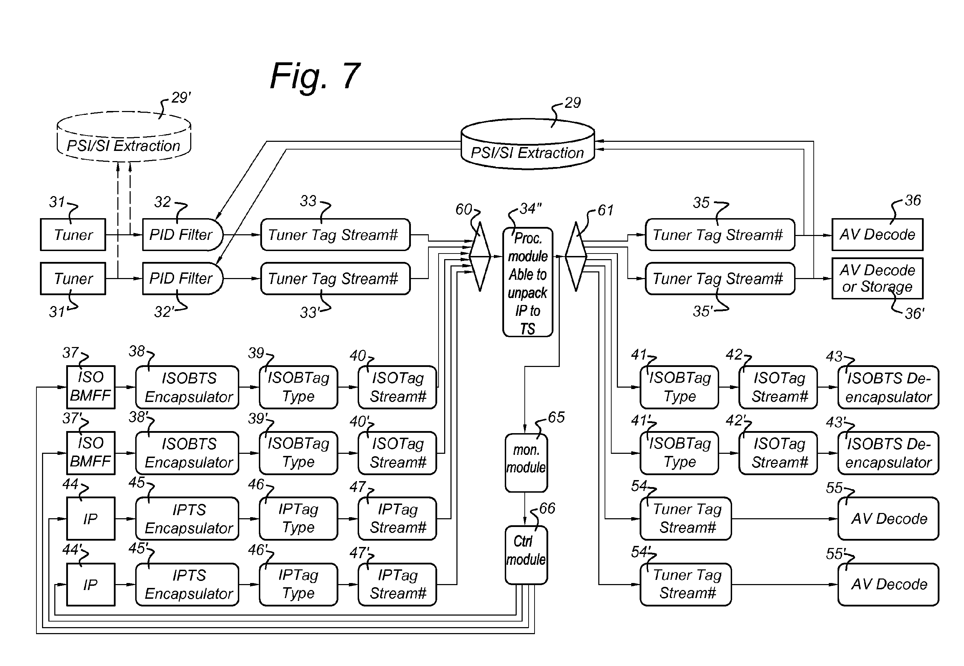

Figure 7 shows a further variant of the system of figure 5 according to a further embodiment of the invention. In this case a transport stream processor module 34" is provided, which is configured to convert encapsulated IP packets in transport stream packets directly to transport stream packets. In this case, after demultiplexing no de-encapsulating is necessary, and only the stream number tag needs to be removed by de-taggers 54, 54' which function similarly to de-taggers 35, 35'. Decode modules 55, 55' are similar to decode modules 36, 36'.

Again it is useful in this case to use unique stream numbers. For example, the stream number taggers 33, 33', 40, 40', 47, and 47' could again use stream numbers 0x7, 0x8, 0x9, 0xa, 0xb, 0xc respectively. The sync bytes of the six input streams could for example again be set to 0x47, 0x48, 0x59, 0x5a, 0x6b, 0x6c. After the processing in module 34" and demultiplexing by demultiplexer 61, the six streams seen by de-taggers 35, 35', 41, 41', 54, 54' will have the sync bytes values of 0x47, 0x48, 0x59, 0x5a, 0x4b, and 0x4c respectively.

As a further alternative to the variant of figure 7, the encapsulators 45, 45' could be enhanced with the functionality of converting IP packets to transport stream packets. In that case, the taggers 46, 46' are no longer needed (the transport stream packets generated by modules 45, 45' are now regular TS packets) and taggers 47, 47' can function similarly to taggers 33, 33'. As a result, the sync byte values may be set by taggers 47 and 47' as 0x4b and 0x4c respectively. The TS processing module 34" can then be the same as TS processing module 34.

The monitoring module 65 can monitor four transport streams for decryption information packets. The monitoring module 65 of figure 7 is configured to detect packets of a first type that indicate that the CAM 34" is initialized for ISOBMFF decryption and packets of a second type that indicate that the CAM 34" is initialized for standard transport stream decryption. The packets of the first and second type may have different formats. Based on the stream number of the detected packets, the controlling module 66 will cause the corresponding interface module 37, 37' (ISOBMFF) or 44, 44' (IP) to start requesting encrypted data.

The examples of figures 5, 6, and 7 each show two tuner streams, two ISOBMFF streams, and two IP packet streams. However, it is understood that the invention is not limited to this configuration. The invention can be practised with any number of streams. If only one stream is provided of each type (e.g. one tuner stream and one IP packet stream) then it may not be necessary to use the stream number tagging and de-tagging modules.

In the above specification, many functional blocks have been shown in the figures, and their functionality has been explained. In nowadays equipment, such functional blocks are implemented in the form of suitable digital technology, e.g., by means of a processor 63 connected to suitable memory 62, as shown in figure 8. Memory 62 may comprise at least one of random access memory, read only memory, electrically erasable read only memory, or any other suitable memory type known to persons skilled in the art. The memory 62 stores a suitable computer program comprising data and instructions arranged to provide the functional component concerned with the functionality as described in the above specification. Implementation may also be in the form of ASICs (application specific integrated circuits), etc. one or more of the functional blocks may be implemented in one or more integrated circuits together.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A data processing system for receiving data from a data network, the system comprising:
- a controlling module (66) for controlling data reception from the network;
- a transport stream processing module (34, 34', 34") for processing transport stream packets (71, 72, 73) comprising the data received from the network; wherein the transport stream processing module (34, 34', 34") is configured to receive transport stream packets as input packets (71, 72, 73), decrypt encrypted input packets (72, 73), and emit transport stream packets as output packets (74, 75, 76) based on the input packets (71, 72, 73); and
- a monitoring module (65, 65a, 65b) configured to monitor the packets emitted by the transport stream processing module (34, 34', 34") and to send a signal to the controlling module when an output packet (74) indicating that the stream processing module is ready to decrypt encrypted input packets (72, 73) is emitted.

2. System according to claim 1, wherein the input packets (71, 72, 73) comprise a decryption information data packet (71) comprising data for decrypting encrypted data, and the monitoring module (65, 65a, 65b) is configured to signal the controlling module (66) when a packet (74) based on the decryption information data packet (71) is emitted by the transport stream processing module (34, 34', 34").

3. System according to any of the previous claims, wherein the transport stream processing module (34, 34', 34") comprises a Conditional Access Module, CAM, such as a Common Interface, CI, or Common Interface Plus, CI+, CAM, for decrypting encrypted data received in transport stream packets.

4. System according to any of the previous claims, wherein the transport stream processing module (34, 34', 34") is configured to encrypt the data in output packets before emitting output packets.

5. System according to any of the previous claims, wherein the data received from the network comprises ISOBMFF data.

6. System according to any of the previous claims, wherein the data received from the network comprise Internet Protocol, IP, packets, such as IP packets comprising IPTV data or ISOBMFF data.

7. System according to any of the previous claims, wherein the transport stream packets received by the transport stream processing module (34, 34', 34") are MPEG-2 transport stream packets.

8. System according to any of the previous claims, further comprising,
- a stream number tagging module (33, 33', 40, 40', 47, 47'), configured to tag packets of a each stream of a plurality of input transport streams with a unique stream number.

9. System according to claim 8, wherein the monitoring module (65, 65a, 65b) is configured to detect the stream number of the data packet indicating that the stream processing module is ready to decrypt encrypted input packets (72, 73), and to send information relating to the stream number to the controlling module (66).

10. System according to any of the previous claims, further comprising,
- an encapsulation module (38, 38', 45, 45'), configured to encapsulate data received from the network in transport stream packets suitable for the transport stream processing module (34, 34', 34"); and

11. System according to claim 10, further comprising
- a stream type tagging module (39, 39', 46, 46'), configured to receive transport stream packets comprising the encapsulated data from the encapsulation module, to tag the packets to indicate the type of encapsulated data, and to provide the tagged packets to the transport stream module for processing.

12. System according to any of the previous claims, further comprising
- a tuner (31, 31') configured to receive an audio/video signal and to provide transport stream packets from said signal;
- a multiplexer (60) configured to multiplex tagged transport stream packets from the tagging module (40, 40', 47, 47') with transport stream packets from the tuner to produce multiplexed transport stream packets, said multiplexer providing the multiplexed transport stream packets to the transport stream processing module (34, 34', 34").

13. Method for processing data received from a network, the method comprising
- receiving data from the network via a network interface (37, 37', 44, 44');
- providing the received data as input transport stream packets (71, 72, 73) to a transport stream processing module (34, 34', 34");
- monitoring output transport stream packets (74, 75, 76) of the transport stream processing module (34, 34', 34"); and
- after detecting an output packet (74) indicating that the transport stream processing module (34, 34', 34") is ready to decrypt encrypted data, controlling the network interface (37, 37', 44, 44') to receive encrypted data (72, 73).

14. Method according to claim 13, wherein the controlled network interface (37, 37', 44, 44') is selected based on a stream number of the detected output packet (74) indicating that the transport stream processing module (34, 34', 34") is ready to decrypt encrypted data.

15. Computer storage medium comprising computer program instructions which, when executed, cause a programmable computer device to perform the method according to claim 13 or 14 or, when executed on a processor of an audio/video device, cause said device to correspond to any of the claims 1-12.
